# EUROPÄISCHE PATENTSCHRIFT

(11) **EP 1 334 900 B1**
(45) Veröffentlichungstag und Bekanntmachung des Hinweises auf die Patenterteilung: **09.08.2006**
(21) Anmeldenummer: 03002452.5
(22) Anmeldetag: 05.02.2003
(51) Int. Cl.: B62D 33/067, B62D 33/07

(54) **Hintere Lagerung des kippbaren Fahrerhauses eines Frontlenker-Lastkraftwagen**
Rear mounting for tiltable cab of cab-over-engine lorry
Articulation postérieure pour cabine basculante d'un camion à cabine avancée

(30) Priorität: 11.02.2002 AT 2062002
(43) Veröffentlichungstag der Anmeldung: 13.08.2003
(73) Patentinhaber: MAN Nutzfahrzeuge Österreich AG, 4400 Steyr (AT)
(72) Erfinder: Wunderlich, Walter, Dipl.-Ing., 4441 Behamberg (AT); Täuber, Klemens, Ing., 4400 Steyr (AT); Wührleitner, Gerhard, Ing., 4400 Steyr (AT)

(56) Entgegenhaltungen:
- DE-A- 3 109 425
- DE-A- 19 961 670
- US-A- 3 397 910

## Beschreibung

Die Erfindung betrifft eine hintere Lagerung des kippbaren Fahrerhauses eines Frontlenker-Lastkraftwagen, bei der das Fahrerhaus über einen zum Kippen lösbaren Verriegelungsmechanismus mit einer etwa U-förmigen Trägerkonsole gekuppelt ist, die über je Fahrzeugseite ein an ihr angeschlossenes Federbein am Fahrgestellrahmen angelenkt und abgefedert ist, und zwar über jeweils einen seitlich außen an einem Längsträger des Fahrgestellrahmens befestigten Lagerbock, an dem es mit seinen untenendigen Lagerauge angelenkt ist.

Die Erfindung geht aus von einer aus der DE 19961670 A1 (=̂ AT 407034 B) bekannten hinteren Fahrerhauslagerung eines Frontlenker-Lastkraftwagen. Dort kommt eine räumlich relativ hoch angeordnete U-förmige Trägerkonsole zur Anwendung. Dies deshalb, weil die Federbeine an den unteren Enden von deren Seitenschenkeln quasi als deren Verlängerung angeordnet sind. Außerdem sind dort zwischen Trägerkonsole und Federbeinen Halter eingebaut, die zur Quer-, Längs- und Seitenführung der Trägerkonsole und damit des angeschlossenen Fahrerhauses dienen. Die zusätzlichen Halter beanspruchen relativ viel Platz, was die Anordnung und Unterbringung anderer Fahrzeugteile behindern kann.

Es ist daher Aufgabe der Erfindung, eine hintere Fahrerhaus-Lagerung zu schaffen, die äußerst platzsparend sowie kostengünstig realisierbar ist und außerdem sicherstellt, dass das Fahrerhaus auch bei einem etwaigen Bruch eines oder beider Federbeine noch sicher am Fahrgestell gehalten bleibt

Diese Aufgabe ist erfindungsgemäß durch eine hintere Fahrerhauslagerung mit dem im Anspruch 1 angegebenen Merkmalen gelöst.

Vorteilhafte Ausgestaltungen und Weiterbildungen dieser Lösung sind in den Unteransprüchen gekennzeichnet.

Aufgrund der erfindungsgemäßen Anordnung der beiden Federbeine innerhalb der U-förmigen Trägerkonsole, jeweils benachbart zu einen Seitenschenkel derselben, ergibt sich eine äußerst platzsparende hintere Fahrerhauslagerung, die es außerdem erlaubt, einen der beiden Halter für ein Federbein ebenso wie den hierzu benachbarten Seitenschenkel der Trägerkonsole erfindungsgemäß auch noch als Teil einer Sicherungseinrichtung heranzuziehen und auszugestalten, die beim Bruch eines oder beider Federbeine das Fahrerhaus am Fahrgestell hält. Darüber hinaus lässt es die erfindungsgemäße Ausgestaltung der Trägerkonsole sowie Anordnung der Federbeine und Lagerböcke zu, dass letztere auch Zusatzfunktionen übernehmen und hierfür entsprechend ausgestaltet bzw. ausgestattet werden können, für welche Zusatzfunktionen bisher eigenständige Halter vorgesehen wurden.

Nachfolgend ist die erfindungsgemäße Lösung anhand eines in der Zeichnung dargestellten Ausführungsbeispiels noch näher erläutert. In der Zeichnung zeigen dabei:
- Fig. 1: einen Querschnitt durch den Rahmen eines Frontlenker-Lastkraftwagen mit der hinteren Fahrerhauslagerung in Ansicht von hinten,

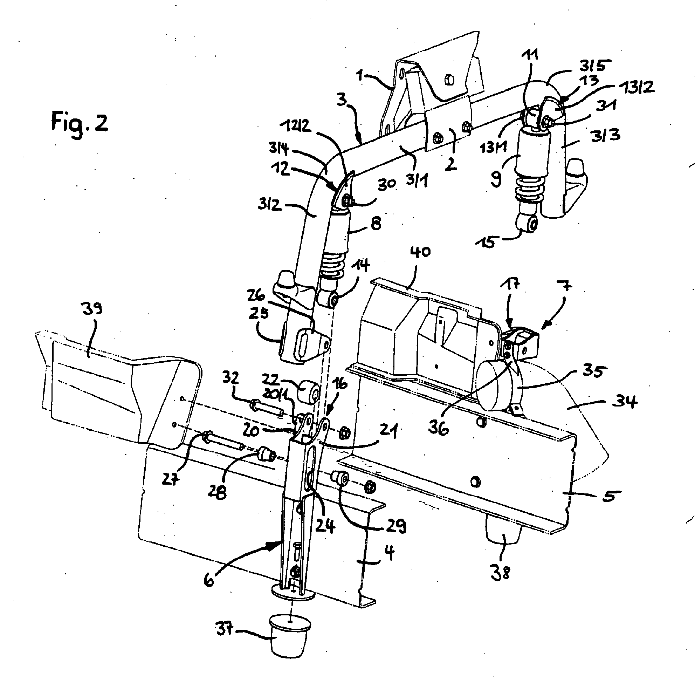

- Fig. 2: die hintere Fahrerhauslagerung gemäß Fig. 1 in perspektivischer Explosionsdarstellung ihrer linken Teile,
- Fig. 3: die hintere Fahrerhauslagerung gemäß Fig. 1 in perspektivischer Explosionsdarstellung ihrer rechten Teile, und
- Fig. 4: einen Schnitt durch die hintere Fahrerhauslagerung gemäß Fig. 1 im Bereich der Sicherheitseinrichtung.

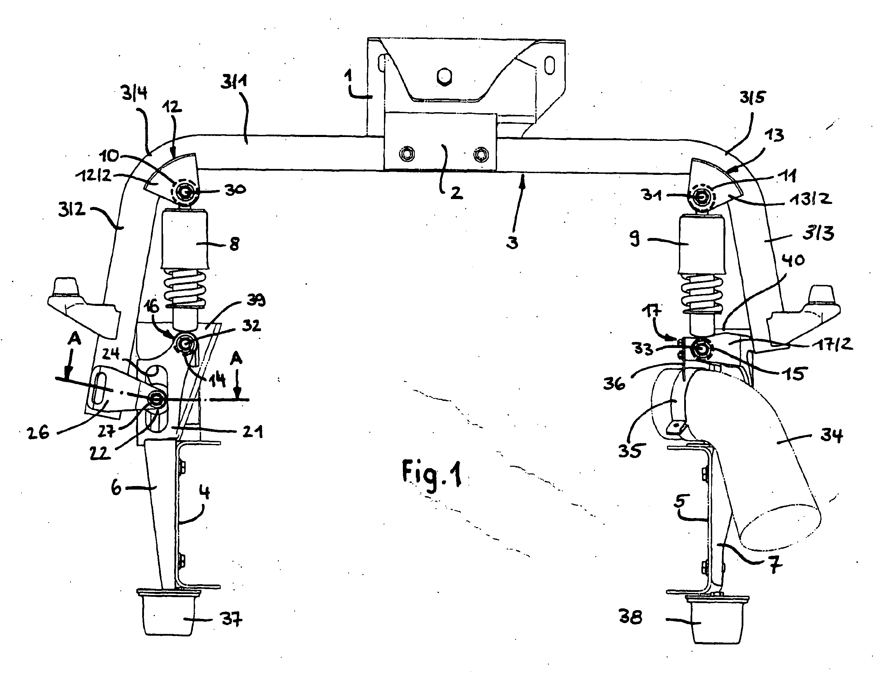

Vom kippbaren Fahrerhaus des Frontlenker-Lastkraftwagen ist in Fig. 1 nur ein an einem hinteren Bodenquerträger befestigtes Teil 1 eines Verriegelungsmechanismus gezeigt, dessen weiteres Teil 2 an einer Trägerkonsole 3 befestigt ist. Die beiden Teile 1, 2 des Verriegelungsmechanismus sind normalerweise miteinander gekuppelt, jedoch für ein Kippen des Fahrerhauses entkuppelbar. Die von hinten gesehen etwa U-förmige Trägerkonsole 3 folgt etwa der Kontur eines im Fahrerhausboden vorhandenen Motortunnels, der ein im Fahrgestell zwischen dessen beiden Rahmenlängsträgern 4, 5 eingebautes, z. B. aus einem Verbrennungsmotor, einer Kupplung und einem Getriebe bestehendes Antriebsaggregat oben überdeckt. Im einzelnen besteht die Trägerkonsole 3 aus einem Querholm 3/1 sowie einem linken Seitenschenkel 3/2 und einem rechten Seitenschenkel 3/3. Die beiden Seitenschenkel 3/2, 3/3 gehen jeweils über einen Bogen 3/4 bzw. 3/5 in den Querholm 3/1 über. Die Trägerkonsole 3 ist aus einem Metallrohr z. B. durch Biegen hergestellt. Mit 6 ist ein am linken Rahmenlängsträger 4 befestigter Lagerbock und mit 7 ein am rechten Rahmenlängsträger 5 befestigter Lagerbock bezeichnet. Mit 8 ist ein linkes Federbein und mit 9 ein rechtes Federbein bezeichnet. Jedes Federbein 8, 9 ist erfindungsgemäß innerhalb der U-förmigen Trägerkonsole 3 benachbart zu einem Seitenschenkel 3/2 bzw. 3/3 angeordnet und mit seinem obenendigen Lagerauge 10, 11 an einem trägerkonsolenfesten Halter 12, 13 angelenkt. Außerdem ist erfindungsgemäß wenigstens einer der beiden das untere Ende 14 bzw. 15 eines Federbeines 8, 9 lagernden Lagerbockes 6, 7 unterhalb oder neben der obenendigenFederbein-Anlenkstelle16, 17nachArteinesKulissenschachtes ausgebildet. Dieser weist eine Innenwand mit einer inneren Führungsfläche 18 und eine Außenwand mit einer zur inneren Führungsfläche 18 parallelen äußeren Führungsfläche 19 sowie eine vordere Seitenwand 20 und eine hintere Seitenwand 21 auf, deren Innenflächen auch parallel zueinander angeordnet sind. In diesem Kulissenschacht ist erfindungsgemäß eine am unteren Ende des benachbarten Seitenschenkels 3/2 (bzw. 3/3) der Trägerkonsole 3 gelagerte Führungsrolle 22 quer- und längsgeführt sowie vertikal beweglich aufgenommen. Die beiden, den Kulissenschacht am Lagerbock 6 vorn und hinten begrenzenden Seitenwände 20, 21 weisen jeweils Vertikallanglöcher 23, 24 mit einer auf den maximalen Fahrerhauseinfederungsweg abgestellten Länge auf und werden von am unteren Ende des zugeordneten Seitenschenkels 3/2 der Trägerkonsole 3 angeordneten Lagerflanschen 25, 26 übergriffen, in denen zueinander koaxiale Durchgangsbohrungen für die Aufnahme einer Querschraube 27 ausgebildet sind. Zwischen den beiden Lagerflanschen 25, 26 erstrecken sich zwei zueinander koaxiale, an ihnen mittels der durchgehenden Querschraube 27 befestigte, auch die Vertikallanglöcher 23, 24 in den Seitenwänden 20, 21 des Lagerbockes 6 durchdringende Lagerbuchsen 28, 29. Diese beiden, sich spiegelbildlich zu einer Lagernabe ergänzenden Lagerbuchsen 28, 29 sind auf dem Schaft der Querschraube 27 mit geringem Spiel gelagert und weisen jeweils einen äußeren Bund 28/1, 29/1 und einen daran anschließenden durchmesserkleineren, gleichmaßigen Lagerbund 28/2, 29/2 auf. Die Führungsrolle 22 ist zwischen den äußeren Bünden 28/1, 29/1 auf den Lagerbunden 28/2, 29/2 drehbar mit geringem Spiel gelagert. Die Gesamtlänge der Lagerbunde 28/2, 29/2 zwischen den äußeren Bünden 28/1, 29/1 ist dabei geringfügig kleiner als der Abstand der zueinander parallelen Innenflächen an den Seitenwänden 20, 21 des Kulissenschachtes am Lagerbock 6. Außerdem ist der Durchmesser der Führungsrolle 22 geringfügig kleiner als der Abstand der Innenflächen 18, 19 am Kulissenschacht des Lagerbockes 6. Hierdurch ist sichergestellt, dass die Führungsrolle 22 mit kleinem Spiel exakt quer- und längsgeführt vertikal im Kulissenschacht - die Einfederungsbewegungen des Fahrerhauses mitmachend und nicht behindernd - auf und ab bewegbar ist und im Falle eines Bruches eines oder beider Federbeine 8, 9 das Fahrerhaus sicher am Fahrgestell gehalten bleibt.

Jedes der beiden Federbeine 8, 9 ist mit seinem obenendigen Lagerauge 10, 11 zwischen den beiden parallelen Wangen 12/1, 12/2 bzw. 13/1, 13/2 des betreffenden Halters 12, 13 aufgenommen und an diesem mittels einer zueinander koaxiale fluchtende Bohrungen durchsetzenden Schraube 30, 31 befestigt. Die beiden Wangen 12/1, 12/2 bzw. 13/1, 13/2 jedes Halters 12 bzw. 13 sind im Bereich des Übergangsbogens 3/4 bzw. 3/5 an der Trägerkonsole entweder direkt darin - wie dargestellt - oder benachbart zu diesem noch am Querholm 3/1 oder am jeweiligen Seitenschenkel 3/2, 3/3 angeschweißt. Dabei ist jedes der beiden Federbeine 8, 9 lotrecht angeordnet und der hierzu jeweils benachbarte Seitenschenkel 3/2, 3/3 der Trägerkonsole 3 ist schräg verlaufend im Sinne einer nach unten gehenden Aufweitung ausgestellt. Mit seinem unteren Lagerauge 14 ist das Federbein 8 im Bereich der Federbein-Anlenkstelle 16 am Lagerbock 6 zwischen hochgezogenen Bereichen der beiden Seitenwände 20, 21 aufgenommen und an diesen mittels einer zueinander koaxial fluchtende Bohrungen durchsetzenden Schraube 32 befestigt. Das gegenüberliegende Federbein 9 ist mit seinem unteren Lagerauge 15 zwischen zwei Seitenwänden 17/1, 17/2 im Bereich der diesbezüglichen Federbein-Anlenkstelle 17 am Lagerbock 7 aufgenommen und an diesen mittels einer zueinander koaxial fluchtende Bohrungen durchsetzenden Schraube 33 befestigt. Dieser Lagerbock 7 ist auch für weitere Funktionen ausgebildet. So dient er auch als Halter für einen Rohrabschnitt 34 einer Luftansaug- und -filteranlage des Lastkraftwagen. Dieser Rohrabschnitt 34 ist in einer Rohrschelle 35 aufgenommen und mittels eines an dieser angeordneten Halters 36 an einer inneren Stirnwand 17/3 im Bereich der Federbein-Anlenkstelle 17 am Lagerbock 7 mittels Schraubverbindungen befestigt.

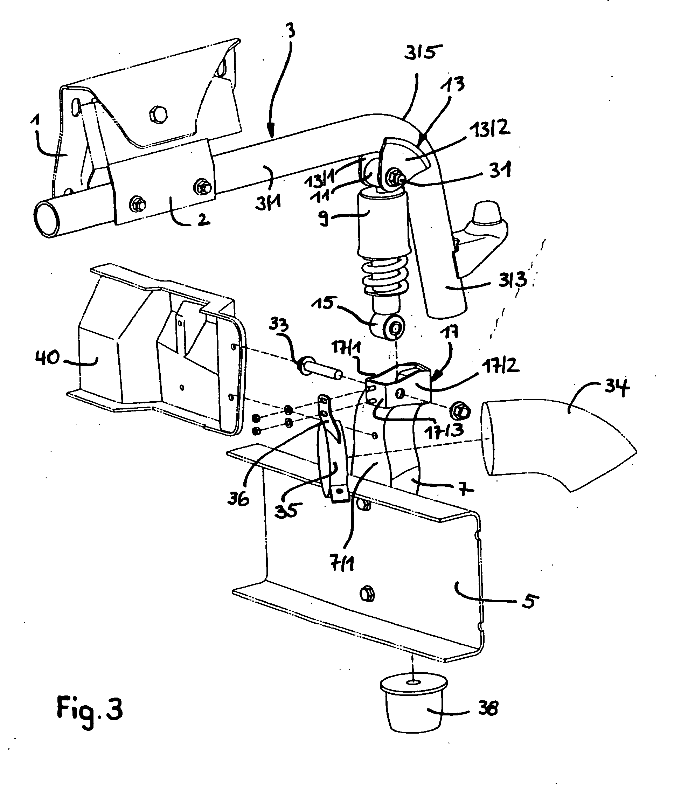

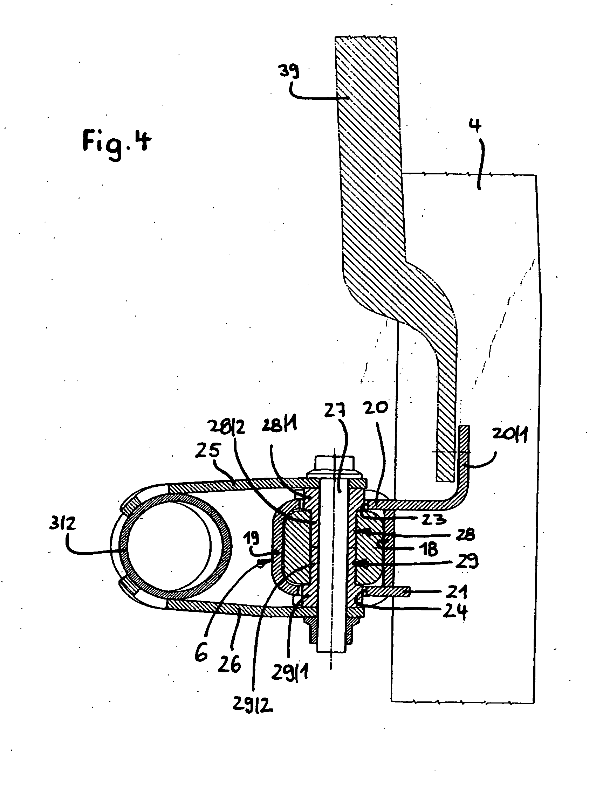

Über seine vorgenannten Funktionen hinaus kann jeder der beiden Lagerböcke 6, 7 für eine weitere Funktion herangezogen sein und hierzu an seinem unteren Ende einen als S-Schlag- bzw. Einfederungsbegrenzer für eine Vorderachsblattfeder des Lastkraftwagen fungierenden Anschlagpuffer 37, 38 tragen. Darüber hinaus kann jeder der beiden Lagerböcke 6, 7 auch noch als Halter für eine Geräuschdämmschürze 39, 40 dienen und für deren Befestigung entsprechend ausgebildet sein. Jede der beiden Geräuschdämmschürzen 39, 40 deckt den Bereich zwischen Fahrerhausboden und Oberkante des Rahmenlängsträgers 4 bzw. 5 seitlich neben dem Antriebsaggregat ab und ist an seinem hinteren Ende an der Innenseite eines oberhalb der Oberkante des Rahmenlängsträgers 4, 5 gegebenen Bereiches des Lagerbockes 6, 7 mittels Schraubverbindungen befestigt. Im Fall des Lagerbockes 6 ist hierzu dessen vordere, den Kulissenschacht begrenzende Seitenwand 20 - wie gut aus Fig. 4 ersichtlich - oberhalb des Rahmenlängsträgers 4 nach vorne abgewinkelt, so dass dort ein Anschlussflansch 20/1 gegeben ist, an dem die Geräuschdämmschürze 39 anliegend befestigbar ist. Im Fall des Lagerbockes 7 ist an diesem seitlich innen eine Anschlussfläche 7/1 gegeben - siehe Fig. 3 -, an dem die Geräuschdämmschürze 40 anliegend befestigbar ist.

## Patentansprüche

1. Hintere Lagerung des kippbaren Fahrerhauses eines Frontlenker-Lastkraftwagen bei der das Fahrerhaus über einen zum Kippen lösbaren Verriegelungsmechanismus (1, 2) mit einer etwa U-förmigen Trägerkonsole (3) gekuppelt ist, die über je Fahrzeugseite ein an ihr angeschlossenes Federbein (8, 9) am Fahrgestellrahmen angelenkt und abgefedert ist, und zwar über jeweils einen seitlich außen an einem Längsträgen (5) des Fahrgestellrahmens befestigten Lagerbock (6, 7), an dem es mit seinem untenendigen Lagerauge (10, 11) angelenkt ist, **dadurch gekennzeichnet** (6,7),
- **dass** jedes Federbein (8, 9) innerhalb der U-förmigen Trägerkonsole (3) benachbart zu einem Seitenschenkel (3/2, 3/3) derselben angeordnet und mit seinem obenendigen Lagerauge (10, 11) an einem trägerkonsolenfesten Halter (12, 13) angelenkt ist, und
- **dass** wenigstens einer der beiden das untere Ende eines Federbeines (8, 9) lagernden Lagerböcke (6, 7), unterhalb oder neben der Federbein-Anlenkstelle (16, 17) nach Art eines Kulissen-Schachtes ausgebildet ist, der innen und außen sowie vorn und hinten durch Wände mit jeweils zueinander parallelen Führungsflächen (18, 19; 20, 21) begrenzt ist und in dem eine am unteren Ende des benachbarten Seitenschenkels (3/2 bzw. 3/3) der Trägerkonsole (3) gelagerte Führungsrolle (22) quer- und längsgeführt sowie vertikal beweglich aufgenommen ist.

2. Hintere Fahrerhaus-Lagerung nach Anspruch 1, **dadurch gekennzeichnet, dass** der eine Lagerbock (6) im Bereich seines Kulissenschachtes von Seitenwänden (20, 21) begrenzt ist, in denen Vertikallanglöcher (23, 24) mit einer auf den maximalen Fahrerhauseinfederungsweg abgestellten Länge ausgebildet sind und die von am unteren Ende des zugeordneten Seitenschenkels (3/2) der Trägerkonsole (3) angeordneten Lagerflanschen (25, 26) außen übergriffen werden, zwischen denen sich zwei zueinander koaxiale, an ihnen mittels einer durchgehenden Querschraube (27) befestigte, die Langlöcher (23, 24) in den Seitenwänden (20, 21) des Lagerbockes (6) durchdringende und die Führungsrolle (22) drehbar lagernde Lagerbuchsen (28, 29) erstrecken.

3. Hintere Fahrerhaus-Lagerung nach Anspruch 2, **dadurch gekennzeichnet, dass** die beiden Lagerbuchsen (28, 29) gleich ausgebildet sind, sich spiegelbildlich zu einer Lagernabe ergänzen, auf dem Schaft der Querschraube (27) mit geringem Spiel gelagert sind und jeweils einen äußeren Bund (28/1, 29/1) sowie einen daran anschließenden durchmesserkleineren Lagerbund (28/2, 29/2) aufweisen, wobei die Führungsrolle (22) zwischen den äußeren Bünden (28/1, 29/1) auf den Lagerbunden (28/2, 29/2) drehbar mit geringem Spiel gelagert ist, femer die Gesamtlänge der Lagerbunde (28/2, 29/2) zwischen den äußeren Bunden (28/1, 29/1) geringfügig kleiner als der Abstand der zueinander parallelen Innenflächen an den Seitenwänden (20, 21) des Kulissenschachtes am Lagerbock (6) ist und außerdem der Durchmesser der Führungsrolle (22) geringfügig kleiner als der Abstand der Innenflächen (18, 19) am Kulissenschacht des Lagerbockes (6) ist, so dass die Führungsrolle (22) mit kleinem Spiel exakt quer- und längsgeführt vertikal im Kulissenschacht - die Einfederungsbewegungen des Fahrerhauses mitmachend und nicht behindernd - auf und ab bewegbar ist.

4. Hintere Fahrerhaus-Lagerung nach Anspruch 1, **dadurch gekennzeichnet, dass** jedes der beiden Federbeine (8, 9) mit seinem obenendigen Lagerauge (10, 11) zwischen den beiden parallelen Wangen (12/1, 12/2; 13/1, 13/2) des Halters (12, 13) aufgenommen und dort mittels einer quer durchgehenden Schraube (30, 31) befestigt ist, welche Wangen (12/1, 12/2; 13/1, 13/2) im Bereich des Übergängbogens (3/4, 3/5) zwischen jeweils einem Seitenschenkel (3/2, 3/3) und dem Querschenkel (3/1) der Trägerkonsole (3) entweder direkt im Übergangsbogen (3/4, 3/5) oder benachbart zu diesem an der Trägerkonsole (3) angeschweißt sind.

5. Hintere Fahrerhaus-Lagerung nach einem der Ansprüche 1 bis 4, **dadurch gekennzeichnet, dass** jedes der beiden Federbeine (8, 9) lotrecht angeordnet und hierzu der jeweils benachbarte Seitenschenkel (3/2; 3/3) der Trägerkonsole (3) schräg verlaufend, im Sinne einer nach unten gehenden Aufweitung, ausgestellt ist.

6. Hintere Fahrerhaus-Lagerung nach einem der Ansprüche 1 bis 5, **dadurch gekennzeichnet, dass** jeder der beiden Lagerböcke (6, 7) an seinem unteren Ende einen als S-Schlag- bzw. Einfederungsbegrenzer für eine Vorderachsblattfeder des Lastkraftwagen fungierenden Anschlagpuffer (37, 38) trägt.

7. Hintere Fahrerhaus-Lagerung nach einem der Ansprüche 1 bis 6, **dadurch gekennzeichnet, dass** an jedem der beiden Lagerböcke (6, 7) auch noch eine den Bereich zwischen Fahrerhausboden und Längsträger-Oberkante seitlich neben dem Fahrzeugantriebaggregat (= Motor, Kupplung, Getriebe) überbrückende bzw. abdeckende Geräuschdämmungsschürze (39, 40) angeordnet ist.

8. Hintere Fahrerhaus-Lagerung nach Anspruch 1, **dadurch gekennzeichnet, dass** an jenem Lagerbock (7), der dem den Kulissenschacht aufweisenden Lagerbock (6) gegenüber am Fahrgestellrahmen befestigt ist, auch noch ein Rohrabschnitt (34) der Luftansaug- und -filteranlage des Lastkraftwagen angeordnet ist.

## Claims

1. Rear mounts of the tiltable cab of a forward-control truck, in which rear mounts the cab is coupled with an approximately U-shaped carrier console (3) via a locking mechanism (1, 2) disengageable for tilting, which carrier console (3) is located and spring-supported on the chassis frame via a spring strut (8, 9) arranged on each vehicle side and connected to said carrier console (3), said location of and spring support for the carrier console (3) being effected via a bearing block (6, 7) fitted to the outer side of each longitudinal member (5) of the chassis frame, on which bearing block (6, 7) the spring strut (8, 9) is located with its bearing eyes (14, 15) arranged at its lower end, **characterised in that**
• within the U-shaped carrier console (3) each spring strut (8, 9) is arranged adjacent to a side leg (3/2, 3/3) of said carrier console (3) and is articulated with its upper bearing eye (10, 11) on a bracket (12, 13) firmly fitted to the carrier console (3) and
• that at least one of the two bearing blocks (6, 7) supporting the lower end of a spring strut (8, 9) and arranged below or next to the spring-strut articulated point (16, 17) is designed as a sliding-block channel which on the inside and outside as well as at the front and rear is limited by walls with guide faces (18, 19; 20, 21) arranged parallel to one another and in which a guide roller (22) is supported at the lower end of the adjacent side leg (3/2 and 3/3) of the carrier console (3), is located in transverse and longitudinal directions and is movably supported in vertical direction.

2. Rear cab mounts according to Claim 1, **characterised in that** the one bearing block (6) is limited by side walls (20, 21) in the area of its sliding-block channel, which side walls (20, 21) are provided with vertical longitudinal slots (23, 24) with a length adjusted to the maximum cab compression travel and are externally overlapped by bearing flanges (25, 26) arranged at the lower end of the associated side leg (3/2) of the carrier console (3), between which bearing flanges (25, 26) two bearing bushes (28, 29) extend, are coaxial relative to each other, are fastened to said flanges (25, 26) by means of a continuous transverse bolt (27), penetrate the longitudinal slots (23, 24) in the side walls (20, 21) of the bearing block (6) and slewably bear the guide rollers (22).

3. Rear cab mounts according to Claim 2, **characterised in that** the two bearing bushes (28, 29) are of identical design, complement each other mirror-invertedly to form a bearing hub and are mounted with little play on the shaft of the transverse bolt (27), each bearing bush (28, 29) having an outer collar (28/1, 29/1) and an adjacent bearing collar (28/2, 29/2) of smaller diameter, whereby the guide rollers (22) is mounted slewably and with little play on bearing collars (28/2, 29/2) between the outer collars (28/1, 29/1), in addition, the overall length of the bearing collars (28/2, 29/2) between the outer collars (28/1, 29/1) is slightly smaller than the distance between the inner faces on the side walls (20, 21) of the sliding-block channel on the bearing block (6), which inner faces are parallel to each other, and, in addition, the diameter of the guide roller (22) is slightly smaller than the distance between said inner faces (18, 19) on the sliding-block channel of the bearing block (6), so that in the sliding-block channel the guide roller (22) can be moved vertically up and down with little play in exact transverse and longitudinal directions - following the cab's compression motion without hampering it.

4. Rear cab mounts according to Claim 1, **characterised in that** each of the two spring struts (8, 9) with its upper bearing eye (10, 11) is supported between the two parallel legs (12/1, 12/2; 13/1, 13/2) of the bracket (12, 13) and fastened by means of a bolt (30, 31) passing through said bearing eye (10, 11) in transverse direction, which legs (12/1, 12/2; 13/1, 13/2) are, in the area of the transition arch (3/4, 3/5) between each side leg (3/2, 3/3) and the transverse leg (3/1) of the carrier console (3), welded either to the transition arch (3/4, 3/5) direct or to the carrier console (3), which is adjacent to said transition arch (3/4, 3/5).

5. Rear cab mounts according to one of the Claims 1 to 4, **characterised in that** each of the two spring struts (8, 9) is arranged perpendicularly and each adjacent side leg (3/2, 3/3) of the carrier console (3) extends obliquely in the sense that they sply in downward direction.

6. Rear cab mounts according to one of the Claims 1 to 5, **characterised in that** the lower end of each of the two bearing blocks (6, 7) carries a stop buffer (37, 38) serving as an S-stop or spring compression limiter for a front axle leaf spring in the truck.

7. Rear cab mounts according to one of the Claims 1 to 6, **characterised in that** also an anti-noise skirt (39, 40) bridging and covering the area between the cab floor and the upper edge of the longitudinal members and laterally adjacent to the vehicle drive unit (=engine, clutch, gearbox) is arranged at each of the two bearing blocks (6, 7).

8. Rear cab mounts according to Claim 1, **characterised in that** also a tube section (34) of the air intake and filter system of the truck is also arranged at that bearing block (7) which is fastened to the chassis frame opposite the bearing block (6) featuring the sliding-block channel.

## Revendications

1. Suspension arrière de la cabine basculante d'un camion à cabine avancée, dans le cas de laquelle la cabine est couplée à une console support (3) en forme de U par le biais d'un mécanisme de verrouillage (1, 2) desserrable pour la basculer, cette console étant articulée et amortie par une jambe de suspension (8, 9) reliée à elle sur le cadre du châssis de chaque côté du véhicule, et plus exactement à chaque fois par un support de fixation fixé latéralement à l'extérieur sur un longeron du cadre de châssis, support de fixation sur lequel la jambe de suspension est articulée par son orifice de fixation (10, 11) placé à l'extrémité inférieure, **caractérisée**
- **en ce que** chaque jambe de suspension (8, 9) est disposée dans l'espace de la console support en forme de U (3) à proximité d'un montant latéral (3/2, 3/3) de celle-ci et est articulée au niveau d'un support (12, 13) fixé à la console support par son orifice de fixation placé (10, 11) à l'extrémité supérieure, et
- **en ce qu'**au moins l'un des deux supports de fixation (6, 7) accueillant l'extrémité inférieure d'une jambe de suspension (8, 9) est formé en dessous ou près du point d'articulation de la jambe d'amortisseur (16, 17) sous forme d'un compartiment à coulisse délimité à l'intérieur et à l'extérieur ainsi qu'à l'avant et à l'arrière par des cloisons avec des surfaces de guidage (18, 19 ; 20, 21) parallèles les unes par rapport aux autres, et dans lequel est logé un rouleau de guidage (22) accueillant l'extrémité inférieure du montant latéral (3/2 ou 3/3) voisin de la console support (3) par un guidage transversal et longitudinal ainsi que mobile de manière verticale.

2. Suspension arrière de cabine selon la revendication 1, **caractérisée en ce que** le support de fixation (6) est délimité au niveau de son compartiment à coulisse par des cloisons latérales (20, 21) dans lesquelles sont formées des trous oblongs verticaux (23, 24) d'une longueur adaptée à la course maximale de débattement de la cabine et les brides de fixation (25, 26) disposées à l'extrémité inférieure du montant latéral (3/2) attribué de la console support (3) sont recouverts à l'extérieur et présentent entre elles deux douilles de fixation (28, 29) coxiales l'une par rapport à l'autre, fixées aux brides de fixation au moyen d'une vis transversale (27) traversante, pénétrant par les trous oblongs (23, 24) dans les cloisons latérales (20, 21) du support de fixation (6) et accueillant de manière pivotable le rouleau de guidage (22).

3. Suspension arrière de cabine selon la revendication 2, **caractérisée en ce que** les deux douilles de fixation (28, 29) sont formées à l'identique, se complètent de manière inversée par rapport à un moyeu de fixation, sont logés sur la tige de la vis transversale (27) avec un faible jeu et présentent chacune une collerette extérieure (28/1, 29/1) ainsi qu'une collerette de fixation (28/2, 29/2) reliée à celle-ci de diamètre plus petit, auquel cas le rouleau de guidage (22) est logé de manière pivotable avec un faible jeu entre les collerettes extérieures (28/1, 29/1) sur les collerettes de fixation (28/2, 29/2), la longueur totale des collerettes de fixation (28/2, 29/2) entre les collerettes extérieures (28/1, 29/1) étant de plus légèrement inférieure à la distance des surfaces intérieures parallèles l'une par rapport à l'autre au niveau des cloisons latérales (20, 21) du compartiment à coulisses sur le support de fixation (6) et, en outre, le diamètre du rouleau de guidage (22) étant légèrement inférieur à la distance des surfaces intérieures (18, 19) au niveau du compartiment à coulisses du support de fixation (6) de telle manière que le rouleau de guidage (22) puisse se déplacer avec un petit jeu précisément par guidage transversal et longitudinal de manière verticale dans le compartiment à coulisses, suivant et n'empêchant pas les mouvements de débattement de la suspension.

4. Suspension arrière de cabine selon la revendication 1, **caractérisée en ce que** chacune des deux jambes de suspension (8, 9) est logée entre les deux flasques parallèles (12/1, 12/2 ; 13/1, 13/2) du support (12, 13) avec son orifice de fixation (10, 11) à l'extrémité supérieure et est fixée à cet endroit au moyen d'une vis (30, 31) passant transversalement, les flasques (12/1, 12/2 ; 13/1, 13/2) étant soudés au niveau du coude de transition (3/4, 3/5) entre chacun des montants latéraux (3/2, 3/3) et le montant transversal (3/1) de la console support (3) soit directement dans le coude de transition (3/4, 3/5), soit à proximité par rapport à celui-ci sur la console support (3)

5. Suspension arrière de cabine selon l'une des revendications 1 à 4, **caractérisée en ce que** chacune des deux jambes de suspension (8, 9) est disposée perpendiculairement et, pour cela, chacun des montants latéraux (3/2, 3/3) voisins de la console support (3) est posé de manière inclinée, en vue d'un élargissement allant vers le bas.

6. Suspension arrière de cabine selon l'une des revendications 1 à 5, **caractérisée en ce que** chacun des deux supports de fixation (6, 7) porte sur son extrémité inférieure une butée élastique (37, 38) servant de limiteur en S ou de débattement pour une lame de suspension de l'essieu avant du camion.

7. Suspension arrière de cabine selon l'une des revendications 1 à 6, **caractérisée en ce qu'**un tablier d'insonorisation (39, 40) chevauchant ou recouvrant la zone entre le plancher de cabine et l'arête supérieure du longeron latéralement près de l'organe d'entraînement du véhicule (= moteur, embrayage, boîte de vitesses) est disposé sur chacun des deux supports de fixation (6, 7).

8. Suspension arrière de cabine selon la revendication 1, **caractérisée en ce qu'**une section tubulaire (34) de l'installation d'admission d'air et de filtrage du camion est disposée sur chaque support de fixation (7) fixé sur le cadre de châssis vis-à-vis du support de fixation (6) présentant le compartiment à coulisses.
